# EUROPÄISCHE PATENTANMELDUNG

(11) **EP 1 932 954 A1**
(43) Veröffentlichungstag der Anmeldung: **18.06.2008**
(21) Anmeldenummer: 06025145.1
(22) Anmeldetag: 05.12.2006
(51) Int. Cl.: C25F 3/14, B23H 9/10

(54) **Verfahren zum Beschichten eines mit Öffnungen versehenen Bauteils**

(71) Anmelder: Siemens Aktiengesellschaft, 80333 München (DE)
(72) Erfinder: Jensen, Jens Dahl, Dr., 14050 Berlin (DE); Steinbach, Jan, Dr., 13353 Berlin (DE); Walter, Steffen, Dr., 85667 Oberpframmern (DE)

(57) **Zusammenfassung**

Die Erfindung betrifft ein Verfahren zum Beschichten eines mit Öffnungen versehenen Bauteils (1), bei dem eine MCrAlY-Beschichtung (3) flächig auf das Bauteil (1) aufgebracht wird und die MCrAlY-Beschichtung (3a-c) lokal im Bereich der Öffnungen (2a-c) elektrochemisch entfernt wird, wobei die MCrAlY-Beschichtung (3a-c) im Bereich der Öffnungen (2a-c) vor dem elektrochemisch Entfernen mit einer aluminiumhaltigen Paste (4) bedeckt und einer Wärmebehandlung unterzogen wird, so dass durch Diffusion der Aluminiumgehalt der MCrAlY-Beschichtung (3a-c) im Bereich der Öffnungen (2a-c) im Vergleich zu dem der restlichen MCrAlY-Beschichtung (3) erhöht wird und die MCrAlY-Beschichtung (3a-c) im Bereich der Öffnungen (2a-c) anschließend selektiv elektrochemisch entfernt wird.

## Beschreibung

Die Erfindung betrifft ein Verfahren zum Beschichten eines mit Öffnungen versehenen Bauteils, bei dem eine MCrAlY-Beschichtung flächig auf das Bauteil aufgebracht wird und die MCrAlY-Beschichtung lokal im Bereich der Öffnungen elektrochemisch entfernt wird.

Bauteile wie Turbinenschaufeln, die in einer chemisch aggressiven Atmosphäre in einem Temperaturbereich > 1000°C eingesetzt werden, müssen zur Verlängerung ihrer Lebensdauer mit Beschichtungen versehen werden. Die im Stand der Technik verwendeten Beschichtungssysteme bestehen dabei zumeist aus einer unmittelbar auf der Turbinenschaufel vorhandenen Haftvermittlerschicht und einer wiederum auf dieser aufgebrachten keramischen Wärmedämmschicht. Als Haftvermittlerschichten kommen so genannte MCrAlY-Beschichtungen zum Einsatz. Legierungen für solche Beschichtungen sind beispielsweise in der EP 0 486 489 B1, EP 0 786 017 B1, EP 0 412 397 B1 und EP 1 306 454 A1 beschrieben.

Um die thermische Belastung der Turbinenschaufeln während des Betriebes zu reduzieren, sind diese außerdem mit einer Vielzahl von Kühlluftbohrungen versehen. Die aus den Kühlluftbohrungen austretende Luft sorgt für eine Kühlung der Oberfläche der Turbinenschaufel.

Die Kühlluftbohrungen werden vor der Beschichtung der Turbinenschaufeln mit Hilfe bekannter Verfahren, beispielsweise durch funkenerosives Bearbeiten, hergestellt. Anschließenden wird die MCrAlY-Beschichtung auf der Oberfläche der Turbinenschaufel aufgebracht. Entsprechende Beschichtungstechniken sind beispielsweise in den US-A-3 413 136, 4 055 705 und 4 321 311 beschrieben.

Bei der Beschichtung werden die Kühlluftbohrungen ganz oder teilweise von der MCrAlY-Beschichtung verschlossen. Daher müssen, um eine ordnungsgemäße Funktion der Kühlluftbohrungen zu gewährleisten, diese Anteile der MCrAlY-Beschichtung entfernt werden.

In der DE 102 366 A1 ist ein Verfahren zum Wiedereröffnen von Kühlluftbohrungen in Turbinenschaufeln, welche teilweise von einer MCrAlY-Beschichtung verschlossen worden sind, beschrieben. Dazu wird ein Elektrolyt in die Kühlluftbohrung geleitet und an die Turbinenschaufel und eine Bearbeitungselektrode, die in der Nähe der Kühlluftbohrung angeordnet ist, ein Strom angelegt. Der Abtrag der MCrAlY-Beschichtung im Bereich der Kühlluftbohrung erfolgt dann elektrochemisch, d.h. dieser Teil der Beschichtung wird in dem Elektrolyt durch einen elektrochemischer Prozesse aufgelöst.

Ein Nachteil des bekannten Verfahrens ist, dass der elektrolytische Angriff nicht selektiv genug erfolgt, so dass auch die Turbinenschaufel selbst bzw. Teile der MCrAlY-Beschichtung angegriffen werden, die sich nicht im Bereich der Kühlluftbohrung befinden.

Aufgabe der vorliegenden Erfindung ist es daher, ein Verfahren der eingangs genannten Art so auszubilden, dass die MCrAlY-Beschichtung im Bereich der Öffnungen elektrochemisch entfernt wird, ohne dass es zu einer Beschädigung des Bauteils oder der übrigen MCrAlY-Beschichtung kommt.

Diese Aufgabe wird erfindungsgemäß dadurch gelöst, dass die MCrAlY-Beschichtung im Bereich der Öffnungen vor dem elektrochemischen Entfernen mit einer aluminiumhaltigen Paste bedeckt und einer Wärmebehandlung unterzogen wird, so dass durch Diffusion der Aluminiumgehalt der MCrAlY-Beschichtung im Bereich der Öffnungen im Vergleich zu dem der restlichen MCrAlY-Beschichtung erhöht wird und die MCrAlY-Beschichtung im Bereich der Öffnungen anschließend selektiv elektrochemisch entfernt wird.

Grundgedanke der Erfindung ist es also, die MCrAlY-Beschichtung im Bereich der Öffnungen vor der elektrochemischen Entfernung zunächst chemisch zu modifizieren. Dazu wird dieser Teil der Beschichtung lokal mit einer aluminiumhaltigen Paste bedeckt und einer anschließenden Wärmebehandlung unterzogen. Hierbei diffundiert Aluminium aus der aluminiumhaltigen Paste in die MCrAlY-Beschichtung im Bereich der Öffnungen und erhöht so deren Gesamtaluminiumgehalt. Nach der Wärmebehandlung weist also die MCrAlY-Beschichtung im Bereich der Öffnungen gegenüber der übrigen MCrAlY-Beschichtung eine veränderte chemische Zusammensetzung, d.h. einen höheren Aluminiumgehalt auf.

Der höhere Aluminiumgehalt der MCrAlY-Beschichtung im Bereich der Öffnungen erleichtert dessen anschließende elektrochemische Entfernung, da hierfür mildere Bedingungen, d.h. weniger aggressive Elektrolyte und/oder geringere Strom- und Spannungsmengen ausreichend sind.

Da sich die MCrAlY-Beschichtung im Bereich der Öffnungen chemisch deutlich von der übrigen MCrAlY-Beschichtung unterscheidet, können die Verfahrensparameter für die elektrochemische Entfernung so gewählt werden, dass ausschließlich die MCrAlY-Beschichtung im Bereich der Öffnungen entfernt wird. Ein Angriff auf die übrige MCrAlY-Beschichtung bzw. auf das Grundmaterial der Turbinenschaufel findet nicht statt.

Gemäß einer ersten Ausführungsform der Erfindung kann vorgesehen sein, die Wärmebehandlung in einer Schutzgasatmosphäre durchzuführen. Ein Vorteil ist hierbei, dass unerwünschte Reaktionen des Grundmaterials des Bauteils, der MCrAlY-Beschichtung und der aluminiumhaltigen Paste mit den Bestandteilen der Luft bei den erhöhten Temperaturen während der Wärmebehandlung verhindert werden. Hierfür eignet sich insbesondere eine Argonschutzgasatmosphäre, da Argongas chemisch inert ist.

Gemäß einer weiteren Ausführungsform ist vorgesehen, dass die Wärmebehandlung in einem Temperaturbereich zwischen 800°C und 1200°C, insbesondere zwischen 900°C und 1150°C und besonders bevorzugt in einem Temperaturbereich zwischen 1000°C und 1100°C durchgeführt wird. Vorteil ist hierbei, dass ein hoher Diffusionsgrad von Aluminium aus der Paste in die MCrAlY-Beschichtung erzielt wird.

Das Verfahren kann auch dafür verwendet werden, eine MCrAlY-Beschichtung auf eine mit Kühlluftbohrungen versehene Turbinenschaufel aufzubringen. Hierbei ist es vorteilhaft, dass eine Vielzahl von Kühlluftbohrungen in der Turbinenschaufel gleichzeitig selektiv wiedereröffnet werden können, ohne dass das Grundmaterial der Turbinenschaufel und die übrige MCrAlY-Beschichtung beschädigt werden.

Im Folgenden wird die Erfindung anhand eines Ausführungsbeispiels mit Bezug auf die Zeichnung näher erläutert. In der Zeichnung zeigt:
- Figur 1: eine schematische Querschnittansicht einer Turbinenschaufel, die mit einer MCrAlY-Beschichtung versehen ist, vor dem Wiedereröffnen der Kühlluftbohrung,
- Figur 2: eine Gasturbine,
- Figur 3: perspektivisch eine Turbinenschaufel,
- Figur 4: perspektivisch eine Brennkammer.

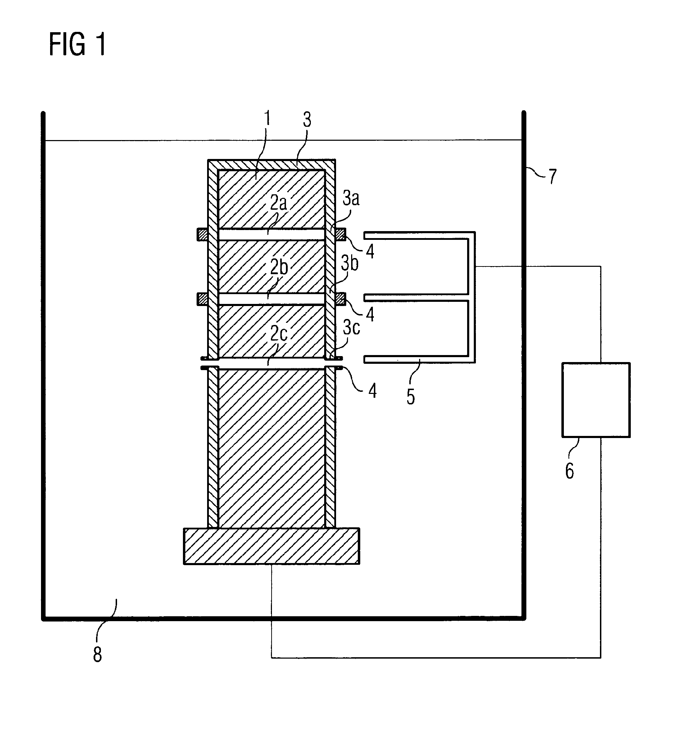

In der Figur 1 ist eine Turbinenschaufel 1, 120, 130 im Querschnitt dargestellt. Sie weist drei horizontal verlaufende Kühlluftbohrungen 2a-c auf. Ein Teil der Oberfläche der Turbinenschaufel 1 ist flächig mit einer MCrAlY-Beschichtung 3 versehen. Die MCrAlY-Beschichtung 3a-c verschließt die Kühlluftbohrungen 2a, 2b vollständig und die Kühlluftbohrung 2c zum Teil.
Die Beschichtung 3c kann auch zum Teil in der Kühlluftbohrung 3c vorhanden sein (coat down).

Auf der die Kühlluftbohrungen 2a-c verschließende Beschichtung 3a-c ist eine aluminiumhaltige Paste 4 aufgebracht.

Beabstandet zu den Kühlluftbohrungen 2a-c befindet sich eine Elektrodenanordnung 5, welche ausgebildet ist, um in die Kühlluftbohrungen 2a-c eingeschoben zu werden. Alternativ kann auch eine planare Gegenelektrode verwendet werden. Diese wird lediglich in der Nähe der Turbinenschaufel 1, 120, 130 angeordnet und nicht in die Kühlluftbohrungen eingeschoben.

Die Turbinenschaufel 1, 120, 130 und die Elektrodenanordnung 5 sind elektrisch leitend mit einer Stromquelle 6 verbunden. Außerdem sind beide innerhalb eines Behälters 7, der mit einem Elektrolyt 8 gefüllt ist, angeordnet. Bei dem Elektrolyt kann es sich beispielsweise um eine Säure handeln.

Um die Turbinenschaufel 1, 120, 130 mit dem erfindungsgemäßen Verfahren zu beschichten, wird zunächst deren Oberfläche mit der MCrAlY-Beschichtung 3 unter Verwendung von im Stand der Technik bekannten Verfahren beschichtet. Dabei werden die Kühlluftbohrungen 2a, 2b vollständig und die Kühlluftbohrung 2c teilweise von der MCrAlY-Beschichtung 3a-c verschlossen.

Anschließend wird auf die MCrAlY-Beschichtung 3a-c aluminiumhaltige Paste 4 aufgebracht. Dabei ist es wesentlich, dass die Paste 4 nur auf der MCrAlY-Beschichtung 3a-c aufgebracht wird, welche die Kühlluftbohrungen 2a-c bedeckt.

Dann wird die beschichtete Turbinenschaufel 1, 120, 130 in einer nicht gezeigten Wärmebehandlungseinrichtung, die eine Argonschutzgasatmosphäre enthält, für ein bis vier Stunden in einem Temperaturbereich zwischen 800°C und 1200°C erwärmt. Während dieser Wärmebehandlung diffundiert Aluminium aus der aluminiumhaltigen Paste 4 in die MCrAlY-Beschichtung 3a-c, wodurch deren der Aluminiumgehalt erhöht wird. Insbesondere eignet sich eine Temperatur von 1080°C für zwei Stunden, da so ein Aluminiumgehalt von bis zu 50 Atomprozent in der MCrAlY-Beschichtung 3a-c erzielt werden kann.

Nach der Wärmebehandlung wird die Turbinenschaufel 1, 120, 130 aus der Wärmebehandlungseinrichtung entfernt, in dem Behälter 7 angeordnet und elektrisch leitend mit der Stromquelle 6 verbunden.

Mit Hilfe der Stromquelle 6 wird dann an die Elektrodenanordnung 5 und an die Turbinenschaufel 1, 120, 130 eine geeignete Spannung angelegt. Bei dem einsetzenden elektrochemischen Prozess lösen sich zunächst die Reste der aluminiumhaltigen Paste 4 und anschließend die MCrAlY-Beschichtung 3a-c in dem Elektrolyt 8. Während des Auflöseprozesses kann die Elektrodenanordnung 5 in die Kühlluftbohrung 2a-c eingeschoben werden, um die lokale Stromdichte zu erhöhen. Auf diese Weise wird selektiv die MCrAlY-Beschichtung 3a-c im Bereich der Kühlluftbohrungen 2a-c entfernt. Der Grundwerkstoff der Turbinenschaufel 1 und die übrige MCrAlY-Beschichtung 3 werden durch das elektrolytische Verfahren nicht angegriffen.

Zuletzt kann die Turbinenschaufel 1, 120, 130 von der Stromquelle 6 getrennt, aus dem Behälter 7 entfernt, abgespült und getrocknet werden.

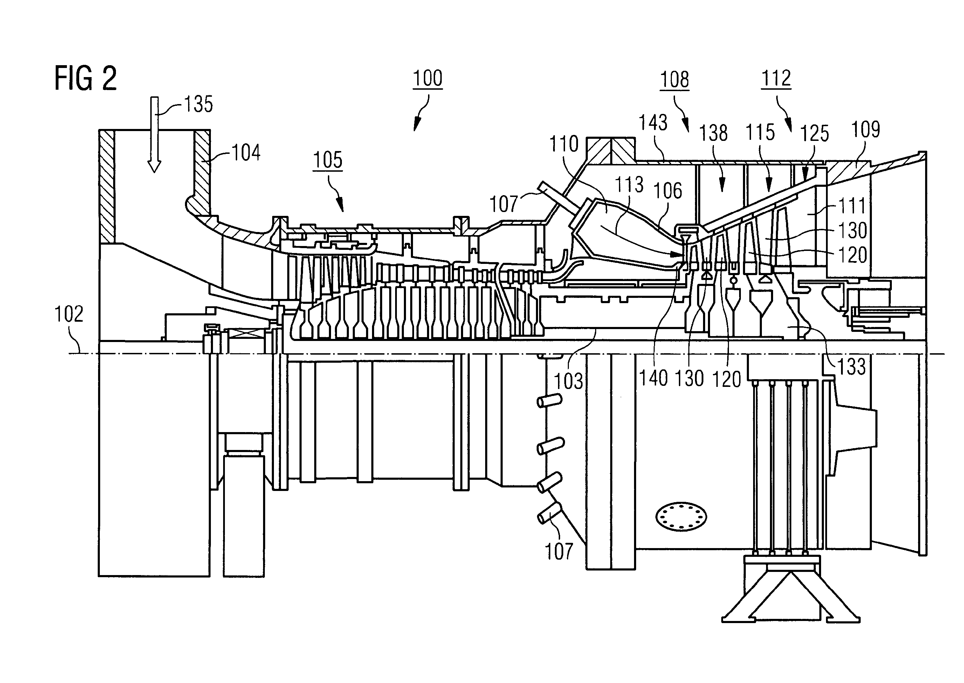

Die Figur 2 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

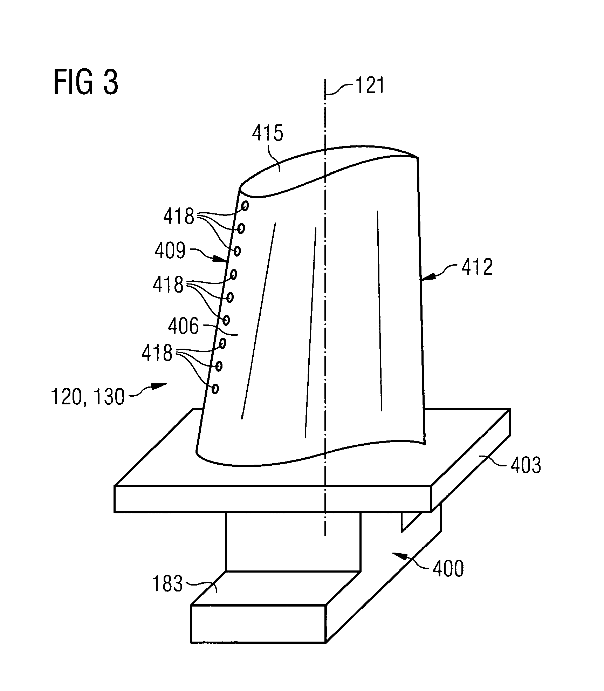

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

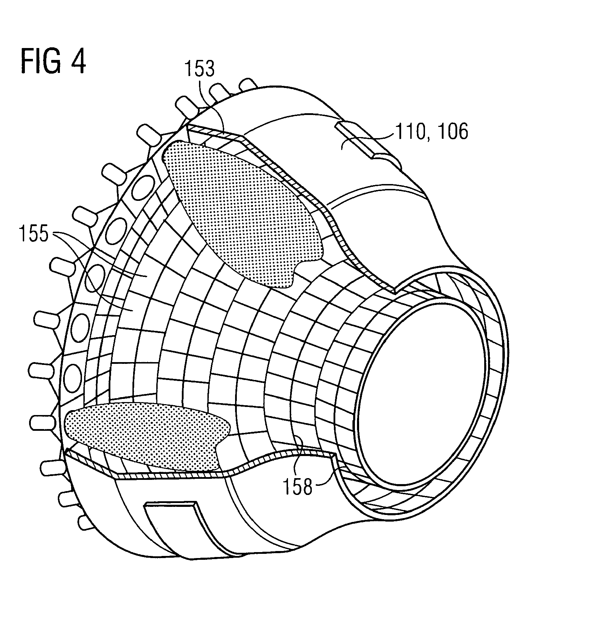

Die Figur 4 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zum Beschichten eines mit Öffnungen versehenen Bauteils (1),
bei dem eine MCrAlY-Beschichtung (3) flächig auf das Bauteil (1) aufgebracht wird und die MCrAlY-Beschichtung (3a-c) lokal im Bereich der Öffnungen (2a-c) elektrochemisch entfernt wird,
**dadurch gekennzeichnet, dass**
die MCrAlY-Beschichtung (3a-c) im Bereich der Öffnungen (2a-c) vor dem elektrochemischen Entfernen mit einer aluminiumhaltigen Paste (4) bedeckt und einer Wärmebehandlung unterzogen wird,
so dass durch Diffusion der Aluminiumgehalt der MCrAlY-Beschichtung (3a-c) im Bereich der Öffnungen (2a-c) im Vergleich zu dem der restlichen MCrAlY-Beschichtung (3) erhöht wird, und
die MCrAlY-Beschichtung (3a-c) im Bereich der Öffnungen (2a-c) anschließend selektiv elektrochemisch entfernt wird.

2. Verfahren nach Anspruch 1,
**dadurch gekennzeichnet, dass**
die Wärmebehandlung in einer Schutzgasatmosphäre durchgeführt wird.

3. Verfahren nach Anspruch 2,
**dadurch gekennzeichnet, dass**
die Wärmebehandlung in einer Argonschutzgasatmosphäre durchgeführt wird.

4. Verfahren nach einem der vorhergehenden Ansprüche,
**dadurch gekennzeichnet, dass**
die Wärmebehandlung in einem Temperaturbereich zwischen 800°C und 1200°C, insbesondere zwischen 900°C und 1150°C und besonders bevorzugt in einem Temperaturbereich zwischen 1000°C und 1100°C durchgeführt wird.

5. Verfahren nach einem der vorhergehenden Ansprüche,
**dadurch gekennzeichnet, dass**
die MCrAlY-Beschichtung (3) auf eine mit Kühlluftbohrungen (2a-c) versehene Turbinenschaufel (1) aufgebracht wird.
